(19) Europäisches Patentamt
European Patent Office
Office européen des brevets

(11) Publication number: 0 342 809 A2

(12) EUROPEAN PATENT APPLICATION

(21) Application number: 89304311.7

(22) Date of filing: 28.04.89

(51) Int. Cl.4: C08L 83/08 , C09D 3/82

(30) Priority: 20.05.88 US 196989

(43) Date of publication of application: 23.11.89 Bulletin 89/47

(84) Designated Contracting States: BE CH DE FR GB IT LI NL SE

(71) Applicant: MINNESOTA MINING AND MANUFACTURING COMPANY
3M Center, P.O. Box 33427
St. Paul, Minnesota 55133(US)

(72) Inventor: Gupta, Vinod K. c/o Minnesota Mining and
Manufacturing Co. 2501 Hudson Road P.O. Box 33427
St. Paul Minnesota 55133-3427(US)

(74) Representative: Baillie, Iain Cameron et al
c/o Ladas & Parry Isartorplatz 5
D-8000 München 2(DE)

# (54) Room temperature-curable compositions for forming organofluorosilicone elastomers.

(57) Organofluorosilicone elastomers and compositions for forming same. The compositions, which comprise an addition-curable, fluorine-containing polydiorganosiloxane having pendant ethylenically-unsaturated groups, a siloxane crosslinking agent, a hydrosilation catalyst, optional solvent, optional adhesion promoter, and optional additives, can be cured at room temperature from two-part mixtures, or by actinic radiation-initiated cure. Also a method for forming fluid storage vessel using such compositions.

EP 0 342 809 A2

Xerox Copy Centre

# ROOM TEMPERATURE-CURABLE COMPOSITIONS FOR FORMING ORGANOFLUOROSILICONE ELASTOMERS

## Field of Invention

The present invention relates to organofluorosilicone elastomers that can be used for such purposes as a protective surface coating, as a sealant, or as a membrane for a storage vessel, e.g., fuel tanks, and also relates to room temperature-curable compositions from which such elastomers can be formed.

## Background

Organosiloxane compositions that cure by a hydrosilation reaction to yield elastomeric products are known in the art. For instance, U.S. Patent No. 3,511,698 (Talcott) discloses the formation of an electrical insulator from an organosiloxane composition.

In jet aircraft today, preformed elastomeric bladders, made from rubber-like materials and located within some compartment of the aircraft, are sometimes used as fuel tanks. There are substantial disadvantages to this method, including that a different bladder configuration must be designed and fabricated for each different model of aircraft and each different fuel tank located therein, and that substantial amounts of space within the portion of the airframe where the tank is located, e.g., fuselage or wing, may be wasted, thereby reducing the potential fuel capacity of the tank and aircraft. Furthermore, such preformed bladders are often difficult to repair, typically requiring substantial labor and time to do so.

An alternative to such preformed elastomeric bladders is to apply a substantially impermeable surface coating to the interior surfaces of a portion of the airframe to form a fuel tank. Such an approach results in efficient use of available space so as to maximize potential fuel capacity.

Previously disclosed systems for producing such surface coatings have included the use of acid-cure or condensation-cure fluorosilicone gums and addition-cure silicones. The use of acid-cure or condensation-cure gums typically results in corrosive byproducts, e.g., acetic acid, or other byproducts which are typically detrimental to the surrounding structure of the airframe. Some byproducts of such materials may also pose health hazards or render working conditions less desirable.

U.S. Patent No. 3,975,362 (Kim et al.) discloses an addition-curable composition containing vinyl-terminated siloxane copolymers, and polyfunctional trifluoropropylmethyl (Si-H)-containing siloxane that are cured, preferably under heat and pressure, using a platinum catalyst. The reference teaches that the polymers disclosed therein are useful, either cured or uncured, as a sealant for fuel tanks.

U.S. Patent No. 4,732,931 (Maxson) discloses a composition comprising a solubilized vinyl-containing, hydroxy-terminated fluorosilicone gum, a curing agent for the gum, a platinum-containing hydrosilation catalyst, a treated reinforcing silicon filler, and a volatile solvent for the gum and curing agent which is cured at a temperature of at least 70°C to form a fluorosilicone coating.

U.S. Patent No. 4,465,805 (Blizzard et al.) discloses a fluorosilicone polymer comprising the reaction product of an organosilicone resin and a polyorganohydrogensiloxane, a vinyl- or hydroxyl-substituted fluorosilicone, and a catalyst.

According to the reference, the compositions may be cured at temperatures from about 50°C to about 250°C to form films which are taught to be resistant to hydrocarbons and useful as release agents, protective coatings for metal components, oil-resistant gasket coatings, etc.

## Summary of Invention

The present invention provides novel organofluorosilicone elastomers which are typically solvent-resistant, offer good tensile strength, and exhibit high elongation and flexibility even at low temperatures such as down to -100°C or below, and also provides novel compositions from which such elastomers are formed by curing. The elastomers provided herein are resistant to salt solutions, hydrocarbon fluids, e.g., fuels and oils, high humidity, ultraviolet radiation, and weathering. Compositions of the invention may be made with controlled viscosity so as to enable application by desired method, e.g., by spraying under high pressure or with an airgun, or by brush. The invention also provides a process for forming fluid storage vessels with the novel compositions of the invention.

Briefly summarizing, the novel compositions provided herein comprise (i) at least one addition-curable,

fluorine-containing polydiorganosiloxane having pendant ethylenically-unsaturated groups, as described herein, (ii) a siloxane crosslinking agent, (iii) a hydrosilation catalyst, and (iv) optional solvent for the polyorganosiloxane and the crosslinking agent, and can be cured at room temperature (e.g., about 20 ° to 25°C) or below, e.g., typically at least down to about 5 ° to 10°C, by a hydrosilation mechanism to form the novel elastomers provided herein. Compositions of the invention may further comprise one or more additives to modify the properties of the resultant elastomer as desired.

In a typical embodiment, the elastomer is formed from a two-part, self-activatable composition which is curable at room temperature. In such an embodiment, the first part typically comprises:

(i) about 100 parts by weight of at least one addition-curable, fluorine-containing polydiorganosiloxane having pendant ethylenically-unsaturated groups, as hereinafter described, which is sometimes referred to herein as a "fluorosilicone gum";

(ii) an effective amount of a platinum-containing hydrosilation catalyst to cure the composition; and

(iii) optionally, a solvent, preferably volatile, for the gum.

The second of the two parts typically comprises:

(i) about 100 parts by weight of at least one fluorosilicone gum;

(ii) between about 1 and about 20 parts by weight of a siloxane crosslinking agent, as hereinafter described; and

(iii) optionally, a solvent, preferably volatile, for the gum and crosslinking agent.

In other embodiments, compositions of the invention may be made so as to be curable upon exposure to actinic radiation. For instance, the following one-part composition of the invention is curable by ultraviolet radiation:

(i) about 100 parts by weight of at least one fluorosilicone gum;

(ii) between about 0.5 and about 10 parts by weight of a siloxane crosslinking agent, as hereinafter described; and

(iii) an effective amount of an ultraviolet radiation-activated hydrosilation catalyst to cure the composition; and

(iv) optionally, a solvent, preferably volatile, for the gum and crosslinking agent.

The compositions provided by the present invention may be used to form elastomeric films and coatings for many applications, some of which include: as a sealant, as a thermal or electrical insulator, forming leaktight membranes used as fluid storage vessels, or protective coatings, or as an adhesive.

## Detailed Description of Invention

As described above, in two-part, self-activatable compositions of the invention, the first part, i.e., part "A", typically comprises:

(i) about 100 parts by weight of at least one addition-curable, fluorine-containing siloxane having pendant ethylenically-unsaturated groups, i.e., a fluorosilicone gum;

(ii) an effective amount of a hydrosilation catalyst; and

(iii) optionally, a solvent, preferably volatile, for the gum;

and the second of the two parts, i.e., part "B", typically comprises:

(i) about 100 parts by weight of at least one fluorosilicone gum;

(ii) between about 1 and about 20 parts by weight of a siloxane crosslinking agent as described hereafter; and

(iii) optionally, a solvent, preferably volatile, for the gum and the crosslinking agent.

Each of parts A and B may be stored at about room temperature, e.g., about 22°C, for up to several weeks or months without adverse effect. Typically parts A and B will preferably be mixed in approximately equal quantities as a matter of convenience, however, it will be understood by those with ordinary skill in the art that the composition of each of parts A and B, and the relative amount of each which is used may be different from that exemplified above.

Upon mixing parts A and B, at about 20 weight percent solids in a ketone solvent, the composition typically may have a working time or "pot life" of about two to eight hours in a closed system depending in part upon the amount of and specific catalyst which is used. Solvent-containing compositions of the invention will typically tend to have shorter pot lives if used in open systems such that the solvent can

evaporate at substantial rate. Cure of the composition to provide the novel elastomer is typically substantially complete after about one half to about seven days, again depending in part upon the amount and type of catalyst which is used. An important aspect of the present invention is that complete cure may be readily achieved at room temperature, i.e., about 20 ° to about 25°C.

Cured elastomers of the invention may be made with tensile strength of 5.0 megapascals or more and elongations of 850 percent or more at room temperature. Advantageously, the elastomers provided herein tend to retain useful tensile and elongation properties at low temperatures, in some instances displaying a tensile strength of more than 12 megapascals and an elongation of more than 50 percent, and in some instances more than 300 percent without breaking at temperatures as low as -55 °C (-65 °F).

Addition-curable, fluorine-containing polydiorganosiloxane random copolymers, i.e., fluorosilicone gums, useful in the present invention include those represented by the general formula:

$$R^2\ \begin{matrix}R^1\\ Si\\ R^3\end{matrix}\ O\ (\begin{matrix}CH_3\\ Si\\ CH_2\\ CH_2\\ CF_3\end{matrix}\ O)_x\ (\begin{matrix}CH_3\\ Si\\ R^7\end{matrix}\ O)_y\ \begin{matrix}R^6\\ Si\\ R^4\end{matrix}\ R^5,$$

wherein $R^1$, $R^2$, $R^3$, $R^4$, $R^5$, and $R^6$ independently are each a substantially nonfunctional organic group, e.g., a saturated functionality group such as a methyl, ethyl, propyl, etc., and $R^7$ is functional organic group containing at least two carbon atoms, and at least one ethylenically-unsaturated bond, e.g., a vinyl radical.

With regard to $R^1$, $R^2$, $R^3$, $R^4$, $R^5$, and $R^6$, smaller groups, such as methyl groups are typically preferred as elastomers made therefrom typically provide optimum solvent and heat resistance, whereas elastomers made from fluorosilicone gums comprising larger groups, i.e., $C_3$ or higher, may tend to have lower solvent and heat resistance. Furthermore fluorosilicone gums having such larger groups typically tend to be more expensive.

With regard to $R^7$, the group contains at least two, typically from two to nine, carbon atoms, and contains at least one ethylenically-unsaturated bond. Preferably, the unsaturated bond is terminally-located as bonds with such locations will typically provide for faster cure rates. When the $R^7$ group contains more than two carbon atoms, non-terminally-located bonds within the group may be ethylenically-unsaturated, however, such bonds typically tend to be less reactive because of the relatively sterically-hindered position of such bonds. Elastomers cured from compositions containing gums wherein the $R^7$ group contains more than nine carbon atoms may tend to have lower solvent and heat resistance.

The ratio of y to x is such that the mole percent of olefinic or vinyl moiety content is between about 0.1 and about 4.0, preferably between about 1.0 and about 2.0. Compositions wherein the olefinic moiety content of the fluorosilicone gum is substantially lower than these ranges may tend to cure relatively slowly and to have lower tensile strength after being cured. Those compositions wherein the olefinic moiety content of the gum is substantially higher than this range may tend to cure too quickly, thereby tending to reduce the pot life of such compositions, and in some instances causing bubbles during curing that may impair the properties of the resultant elastomer.

In fluorosilicone gums used in compositions of the invention, the weight average molecular weight is typically between about 200,000 and 700,000, preferably between about 250,000 and about 650,000, as determined by gel permeation chromatography; and the fluorine content is typically at least about 20, and preferably at least about 30 compositions made with gums having molecular weights substantially below these ranges may tend to have lower tensile strength. Compositions may be made with gums having molecular weights higher than these ranges, however, such compositions will typically have higher solution viscosities, thereby tending to reduce the ease of processability and application to desired substrate. If the fluorine content of the gum is too low the solvent resistance of the resultant elastomer may tend to be reduced, for instance it may tend to swell to a greater extent.

Fluorosilicone gums used in compositions of the invention are "addition-curable". By "addition-curable", it is meant that the gum contains an ehtylenically-unsaturated functional group, i.e., the aforementioned $R^7$ group, to which, in the presence of an addition-cure catalyst, is added a second component having an active hydrogen-silicon (Si-H) bond. An example of such a second component is polymethylhydrodimethylsiloxane copolymer.

Examples of commercially available addition-curable, fluorine-containing polydiorganosiloxanes that may be used in compositions of the present invention include SILASTIC Brand Series LS-2380U, LS-2840, and LS-2860, commercially available from Dow Chemical Company; PS286, commercially available from Petrarch Chemical Co.; and FSE 2080 and FSE 7140 Brand Fluorosilicones, commercially available from General Electric Company.

Polydiorganosiloxanes that may be used in compositions of the invention may be prepared by polymerizing an appropriate cyclosiloxane. Preferably, gums used in compositions of the invention contain no more than trace amounts, and are ideally free, of residual starting materials such as cyclic siloxanes which may interfere with cure of the composition to yield the desired elastomer.

It is believed that the aformentioned SILASTIC Brand gums may contain up to about 20 weight percent of surface-treated silica as a filler. While such fillers are not believed to substantially alter the cure characteristics of the compositions provided herein, they may tend to alter some of the physical properties of the resultant elastomer, e.g., increase its tensile strength or reduce its elongation.

Because the gums used in the invention contain no fluorine in the monomer backbone, the raw material costs of compositions of the invention may be reduced because gums containing fluorine in the backbone of the monomer tend to be more expensive and more difficult to make.

Compositions of the invention may contain a single species of fluorosilicone gum of the type described above, or a mixture of two or more such polymers, e.g., having different molecular weights or compositions. In a two-part composition of the invention, the two parts may each comprise the same single species of fluorosilicone gum, or one or both parts may comprise different single species or combinations of different species of fluorosilicone gum. Selection of different species of gum and determination of the amounts thereof which are to be used in a composition of the invention may be readily made by trial and error in view of the properties desired of the resultant cured elastomer for the specific application for which the composition is being prepared.

Compositions of the invention preferably do not contain more than a minor amount, and are ideally substantially free, of condensation-curable fluorosilicone polymers because the presence of such materials may tend to lower the strength characteristics of the cured products of the composition, and curing of such materials tends to generate undesirable by-products and leaving groups, e.g., hydrolyzable leaving groups that may tend to cause bubbles during cure of the composition. Furthermore, the composition is preferably free of other undesirable impurities such as amines, thiols, and hydroxy groups which may tend to complex with the catalyst, thereby interfering with desired cure.

Compositions of the invention also comprise siloxane random copolymers as crosslinking agents as described herein. Crosslinking agents which are useful in compositions of the invention include those represented by the general formula:

$$(CH_3)_3\!-\!Si\!-\!O\!-\!(\underset{R^8}{\overset{CH_3}{|}}\!\!\!\!Si\!-\!O)_m\!-\!(\underset{H}{\overset{CH_3}{|}}\!\!\!\!Si\!-\!O)_n\!-\!Si\!-\!(CH_3)_3$$

wherein $R^8$ is an alkyl, substituted alkyl, fluoroalkyl such as fluoromethyl, cyano, etc.; the total (m + n) is preferably between about 20 and about 70, the ratio of m:n is between about 1:1 and about 6:1, and the Si-H equivalent weight (i.e., molecular weight divided by number of Si-H groups per molecule) is typically between about 65 and about 520. Preferably the ratio of m:n is between about 2.5:1 and about 4:1, and the Si-H equivalent weight is between about 200 and about 350.

If (m + n) is substantially less than 20, the crosslink density may be reduced, thereby tending to impair the properties of the resultant elastomer, whereas if (m + n) is substantially more than 70, the viscosity of the mixture may be increased so as to interfere with convenient preparation and application of the composition and the speed of cure may be reduced. If the ratio of m:n is substantially above 6:1, the tensile strength and elongation of the resultant elastomer may be reduced and the cure rate of the composition may be slowed, whereas if the ratio is substantially below about 1:1, the rate of cure may be increased so as to make control of same difficult and to cause undesirable formation of bubbles during cure.

Compositions of the invention containing crosslinking agents having Si-H equivalent weights substantially below these ranges indicated above may tend to cure too quickly, causing excessive heat generation and possible bubbling or foaming during cure, thereby weakening the resultant layer or article. Compositions of the invention containing crosslinking agents having substantially higher Si-H equivalent weights, while typically ultimately achieving satisfactory final properties, may tend to cure very slowly.

The $R^8$ group is preferably a methyl group, i.e., the crosslinking agent is a polymethylhydro-dimethyl

siloxane. Such materials tend to be cheaper than siloxanes with different $R^8$ groups. Furthermore, some $R^8$ groups, e.g., alkyls such as octyl groups, may tend to reduce the solvent resistance of the resultant elastomer, or other $R^8$ groups such as a cyano group may tend to cause the elastomer to hydrolyze.

Examples of siloxane copolymers useful as crosslinking agents in the present invention include the following (values in parentheses are respective amounts expressed in weight percent):
(50-55)methylhydro-(45-50)dimethylsiloxane,
(30-35)methylhydro-(65-70)dimethylsiloxane,
(15-18)methylhydro-(82-85)dimethylsiloxane,
(3-4)methylhydro-(96-97)dimethylsiloxane,
(0.5-1)methylhydro-(99-99.5)dimethylsiloxane,
(40-60)methylhydro-(40-60)methylcyanopropylsiloxane,
(25-30)methylhydro-(40-60)methyloctylsiloxane, and
(25-30)methylhydro-(70-75)methyloctylsiloxane, all of which are commercially available from Petrarch Systems, Bristol, Pennsylvania.

Compositions of the invention typically contain between about 0.5 and 10 parts by weight of crosslinking agent per 100 parts by weight of fluorosilicone gum. Compositions containing insufficient amounts of crosslinking agent may not achieve complete cure to attain desired final tensile strength and other properties. Compositions containing too much crosslinking agent may also tend to have reduced tensile strength because the excessive quantities of crosslinking agent molecules in the composition may lead to reduced degree of crosslinks formed between the gum molecules. Because of the difficulty that may be experienced in achieving a complete reaction between all of the silicon-bonded hydrogen atoms and all of the ethylenically-unsaturated radicals present, it is desirable to provide a stoichiometric excess of one these species in the composition. Thus, in compositions of the invention, it is typically useful to provide a ratio of between about 1.1 and about 2.0, and preferably between about 1.4 and 1.7, silicon-bonded hydrogen atoms per each ethylenically-unsaturated radical.

The compositions disclosed herein may be cured to form the novel elastomers of the invention by the cure mechanism known as hydrosilation. This mechanism is typically conducted in the presence of a catalyst comprising a platinum group metal or a compound of such a metal. Examples of useful platinum-based catalysts include hexachloroplatinic acid and complexes of such compounds, such as those described in U.S. Patent No. 3,419,593 (Willing), which is incorporated herein by reference.

Platinum-based catalysts are typically preferred for use in compositions of the invention as the cured products of such compositions typically have excellent physical properties and fast cure rates. An example of such a catalyst is platinum-divinyltetramethyldisiloxane complex which is commercially available from Petrarch Systems as PC075 and PC072.

The catalyst can be chosen so that the hydrosilation cure of the composition is self-initiating upon mixing of the components of the composition, or initiated upon exposure to actinic radiation, e.g., ultraviolet radiation. For instance, trimethylcyclopentadienyl-platinum complex can be used to make compositions of the invention curable by exposure to ultraviolet radiation. Such complexes are disclosed in U.S. Patent No. 4,510,094 (Drahnak) which is incorporated by reference.

Compositions of the invention will typically contain an effective amount of catalyst, i.e., an amount sufficient to catalyze the desired cure mechanism under the desired conditions, e.g., at room temperature within a certain time. The amount of catalyst is typically between about 50 and about 200 parts platinum, and typically preferably between about 75 and about 125 parts platinum, per million parts of curable composition. It will be understood by those with ordinary skill in the art that the optimum amount of catalyst for a specific formulation of a composition of the invention and a specific application, which may be readily determined by trial and error, may be outside of these ranges in some instances.

In some instances, compositions of the invention may contain one or more inhibitors which tend to slow curing of the composition. The amount and type of inhibitor which is used in a composition will depend at least in part upon the catalyst contained therein. Thus the cure characteristics of a composition of the invention can be controlled in part by selection of type and amount of catalyst and inhibitor when formulating the composition.

Preferably, both the A and B parts comprise miscible solvents, ideally the same solvent(s), thereby providing for effective mixing of the two parts and subsequent application of the mixture by brushing, spraying, or coating. Some examples of suitable solvents are ketone-containing hydrocarbons such as methylethyl ketone, methylisobutyl ketone, acetone, and cyclohexanone; ethyl acetate; toluene; tetrahydrofuran; 1,1,1-trichloroethane; cyclohexane; chloroform; methylene chloride; etc., or mixtures thereof. Selection and/or formulation of the solvent or solvent mixture, and determination of the amount of solvent to be used in a composition, is based in part upon the application method to be employed such as spraying

or brushing, the drying time desired, and the substrate or surface to which the composition is being applied.

The solvent is typically present in an amount up to about 85 weight percent of the total weight of the gum, crosslinking agent, and solvent in the curable composition.

Various additives may be incorporated in compositions of the invention to adjust as desired the properties of the resultant elastomer. Some examples of useful additives include fillers, colorants, surfactants, reactive diluents, antioxidants, ultraviolet absorbers, adhesion promoters, inhibitors, etc. If desired, additives may be provided to change the electrical and thermal properties of the resultant elastomer. Examples of useful fillers include fumed silica, metal oxides such as calcium oxide, glass or ceramic microspheres or microbubbles, fibers of metal, wood, or glass, clays, and talc. Examples of useful colorants include carbon black, titanium dioxide, iron oxide, dyes, and pigments. Examples of useful reactive diluents which can be used to alter the crosslinking characteristics of composition herein include those containing unsaturated substituents such as allyl and vinyl groups. Examples of useful surfactants include nonfunctional group-containing silicone oils. Examples of useful adhesion promoters include unsaturated alkoxy silanes such as vinyltrimethoxysilane and allyltriethoxysilane. The types of additives and specific examples thereof disclosed herein are intended to be nonlimiting. Compositions of the invention may comprise one or more of the foregoing types of additives.

Additives may be incorporated in a composition of the invention in amounts sufficient to achieve the desired effect, typically up to about 20 percent by weight of the total composition depending in part upon the nature of the particular additive and the cure activation mechanism.

The compositions of the invention can be applied to a number of substrate materials and cured thereby providing a strong bond thereto. Examples of some of such substrate materials include metals and metal alloys, e.g., aluminum, titanium, steel, copper, brass, etc.; plastics, e.g., polyester, polyethylene, polypropylene, engineered plastics or composites etc.; stone; glass; and wood.

Compositions of the invention can be applied to desired substrates by a number of techniques including brushing, spraying, coating, and many other known techniques.

The present invention also provides a method for forming a fluid storage vessel from the novel elastomers of the invention. According to the invention, a coating of the curable composition provided herein is applied to structural surfaces defining the shape of the vessel. The composition may be applied in one or more successive coats to provide the desired final cured thickness, typically at least about 125 microns (about 5 mils), and can be then cured in situ. Upon curing, the resultant elastomer provides a leaktight layer that seals gaps between portions of the structural surfaces, e.g., seams between adjoining walls, while being supported by same. Storage vessels may thus be formed in many different configurations as determined by the configuration provided by the structural surface. The present invention enables the convenient fabrication of storage vessels in, for instance, different compartments and models of aircraft or different compartments and models of automobiles or boats.

For instance, a fuel tank within the wing of an aircraft may be formed by applying a coating of a composition of the invention to the interior surfaces of a hollow compartment within the wing. The interior surfaces of the structural components of the wing, referred to herein as structural surfaces, define the shape of the vessel. After being coated on the surfaces, e.g., by spraying, the composition is cured in situ such that the elastomer product resulting therefrom provides a leaktight bladder in the form of the desired fuel tank or storage vessel. To form an airplane fuel tank the final cured thickness may typically be between about 250 and about 175 microns (about 10 and about 70 mils). Different final thicknesses may be used for this or other applications.

An advantage of the present invention is that holes in the elastomeric coatings or films provided herein may be easily repaired. For example, a puncture in a fluid storage vessel of the invention can be readily repaired by draining the vessel, cleaning and drying the affected area, applying a quantity of composition of the invention to the area, and then curing.

Surfaces to which compositions of the invention are to be applied should preferably be clean and dry to enhance the adhesion achieved. For some applications, it may be desirable to employ a coupling agent, e.g., a primer or adhesion promoter. For instance, if a composition of the invention is to be applied to a metal surface, an effective amount of an unsaturated alkoxy silane may be used. Such coupling agent can be incorporated in the composition itself as an adhesion promoter or applied directly to the surface as a preliminary priming layer prior to application of the composition of the invention thereto. When incorporated in the composition, between about 0.01 and about 1.0 weight percent of the total composition is typically an effective amount of adhesion promoter. When applied to the surface, an effective amount of the primer can be readily determined by experiment. Examples of silanes that are typically useful as coupling agents with compositions of the invention include unsaturated alkoxy silanes such as vinyltrimethoxysilane, vinyltriethoxysilane, allyltrimethoxysilane, and allyltriethoxysilane.

As discussed above, in some embodiments, compositions of the invention may be made so as to be curable upon exposure to actinic radiation. Such embodiments are typically one-part compositions comprising the following:

(i) about 100 parts by weight of at least one aforedescribed fluorosilicone gum;

(ii) between about 0.5 and about 10 parts by weight of at least one aforedescribed crosslinking agent;

(iii) an effective amount of an ultraviolet radiation-activated, platinum-containing hydrosilation catalyst to cure the composition;

(iv) optionally, a solvent, preferably volatile, for the gum and the crosslinking agent; and

(v) optionally, as desired, one or more of the aforedescribed additives which do not undesirably interfere with an ultraviolet radiation-activated cure mechanism.

Such compositions can be cured by exposure to an ultraviolet radiation source, e.g., a mercury lamp. Typically, moderate heating such as to about 100°C may be necessary to achieve curing depending upon the catalyst employed. Because these compositions rely upon such exposure to achieve curing, the various components should be selected such that the curable composition is sufficiently transmissive to the actinic radiation to permit activation of the catalyst and curing. For instance, as shown in Examples 78 and 79 below, some fluorosilicon gums provide clearer compositions and are accordingly preferred for these embodiments of the invention. Similarly, some of the aforementioned additives such as ultraviolet radiation absorbers and opaque fillers will typically tend to interfere with the desired cure mechanism and will accordingly typically not be used in ultraviolet radiation-curable compositions of the invention.

## Examples

The invention will be further described by the following illustrative examples.

The tensile strength and elongation of the cured elastomers formulated in each Example were determined according to ASTM D-412 using Die C. The volume swell values of the elastomers were determined in accordance with ASTM D-471. Shore A Hardness was determined in accordance with ASTM D-2240.

## Examples 1-9

Examples 1-9 illustrate compositions of the invention with Examples 5-9 further illustrating the effect of utilizing varying amounts of crosslinking agent on the mechanical properties of the resultant elastomers.

In Examples 1-4, parts A and B were each prepared by mixing solutions of 50 grams of SILASTIC LS-2840 (addition-curable, fluorine-containing polydiorganosiloxane having a weight average molecular weight of about 600,000 and an olefinic moiety content of about 1.60 mole percent), 180 grams of methyl isobutyl ketone, and 20 grams of cyclohexanone. In Examples 5-9, parts A and B were made in the same way except that 50 grams of SILASTIC LS-2380U (an addition-curable, fluorine-containing polydiorganosiloxane having a weight average molecular weight of about 629,000 and an olefinic moiety content of about 1.17 mole percent) was used in place of the SILASTIC LS-2840.

A 2:1 mixture of 1,3 divinyltetramethyldisiloxane and chloroplatinic acid was prepared to form the platinum complex catalyst. A 1.0 percent by weight solution of the catalyst in 1,3 divinyltetramethyldisiloxane was then prepared. The indicated amount of that solution was mixed in Part A of the composition. The indicated amount of crosslinker, polymethylhydro-dimethylsiloxane copolymer (having the formula $Me_3SiO(SiMe_2O)_{29}(SiHMeO)_9SiMe_3$, i.e., m/n ratio about 3.2:1, Si-H eq. wt. about 317, was mixed in Part B.

Parts A and B were then mixed while continuously stirring and then poured into a stainless steel mold which was covered for 1-2 hours and then uncovered for 1-3 days at room temperature. A cured fluorosilicone film having a thickness of about 1.8-2.0 millimeters was obtained. The formulations of the compositions and properties of the films cured therefrom are tabulated in Table I.

Table I

| Example | Catalyst (grams) | Crosslinker (grams) | Tensile Strength (MPa) | Elongation (percent) |
|---|---|---|---|---|
| 1 | 0.9 | 3.7 | 5.3 | 800 |
| 2 | 0.7 | 3.9 | 5.3 | 820 |
| 3 | 0.9 | 3.9 | 5.5 | 860 |
| 4 | 1.1 | 3.9 | 5.8 | 800 |
| 5 | 1.0 | 1.0 | 4.0 | 450 |
| 6 | 0.7 | 3.0 | 5.2 | 580 |
| 7 | 0.7 | 3.7 | 5.4 | 550 |
| 8 | 0.7 | 4.4 | 5.9 | 410 |
| 9 | 1.0 | 5.0 | 5.4 | 320 |

Examples 10-16

Examples 10-16 illustrate the use of a fluorosilicone gum having a weight average molecular weight of about 490,000 and an olefinic moiety content of about 1.78 mole percent in a two-part, self-activatable composition of the invention.

The samples were prepared as in Examples 1-4 except that SILASTIC LS-2860 was used in place of SILASTIC LS-2840. The formulations of the compositions and properties of the films cured therefrom are tabulated in Table II.

Table II

| Example | Catalyst (grams) | Crosslinker (grams) | Tensile Strength (MPa) | Elongation (percent) |
|---|---|---|---|---|
| 10 | 0.5 | 3.9 | 3.0 | 580 |
| 11 | 0.7 | 3.5 | 5.6 | 740 |
| 12 | 0.7 | 3.9 | 5.9 | 730 |
| 13 | 0.7 | 4.1 | 5.6 | 730 |
| 14 | 0.9 | 3.9 | 5.8 | 610 |
| 15 | 1.0 | 5.0 | 5.8 | 500 |
| 16 | 1.1 | 3.9 | 5.8 | 620 |

Examples 17-31

Examples 17-31 illustrate effects upon the properties of resultant elastomers of compositions of the invention from using varying amounts of polymethylhydro-dimethylsiloxane crosslinking agent having different Si-H equivalent weights.

The samples were prepared as in Examples 10-16 except that as indicated crosslinking agents having an Si-H equivalent weights of about 65 to about 322 were substituted for the crosslinking agent having an Si-H equivalent weight 317.5. The amount of catalyst solution was substantially constant at about 0.9 grams.

The formulations of the compositions and properties of the films cured therefrom are tabulated in Table III.

Table III

| Example | Crosslinkr (grams) | Crosslinkr SiH eq. wt. | Tensile Strength (MPa) | Elongation (percent) |
|---|---|---|---|---|
| 17 | 0.6 | 65 | 1.4 | 610 |
| 18 | 0.8 | 65 | 2.3 | 640 |
| 19 | 1.0 | 65 | 3.6 | 610 |
| 20 | 1.4 | 140 | 3.0 | 630 |
| 21 | 1.7 | 140 | 4.1 | 750 |
| 22 | 2.0 | 140 | 4.7 | 710 |
| 23 | 2.6 | 227 | 4.2 | 680 |
| 24 | 2.8 | 227 | 4.9 | 630 |
| 25 | 3.0 | 227 | 4.8 | 610 |
| 6 | 3.2 | 275 | 4.1 | 620 |
| 27 | 3.4 | 275 | 4.0 | 680 |
| 28 | 3.6 | 275 | 5.0 | 720 |
| 29 | 3.7 | 322 | 2.8 | 590 |
| 30 | 4.0 | 322 | 2.3 | 630 |
| 31 | 4.3 | 322 | 3.8 | 610 |

Examples 32-40

Examples 32-40 illustrate effects upon the properties of the resultant elastomers of compositions of the invention from varying the amount and Si-H eq. wt. of the crosslinking agent.

The samples were prepared and tested as in Examples 17-31 with the exception that the amount of catalyst solution was about 1.1 grams and the Si-H eq. wt. of the crosslinking agent was varied at between about 356 and about 517.

The results are tabulated in Table IV.

Table IV

| Example | Crosslinker (grams) | Crosslinker SiH eq. wt. | Tensile Strength (MPa) | Elongation (percent) |
|---|---|---|---|---|
| 32 | 4.0 | 356 | 2.5 | 650 |
| 33 | 4.4 | 356 | 3.2 | 570 |
| 34 | 4.8 | 356 | 2.1 | 500 |
| 35 | 4.6 | 410 | 2.3 | 550 |
| 36 | 5.1 | 410 | 3.2 | 600 |
| 37 | 5.6 | 410 | 3.7 | 610 |
| 38 | 5.9 | 517 | 1.8 | 570 |
| 39 | 6.4 | 517 | 2.4 | 550 |
| 40 | 7.0 | 517 | 1.4 | 460 |

Example 41

In Example 41, a polymer of the invention was formed as in Examples 17-31 except that the compositions comprised about 1.6 grams of crosslinker having an Si-H eq. wt. of about 227 and about 2.0 grams of crosslinking agent having an Si-H eq. wt. of about 317.5.

The resultant elastomer had a tensile strength of about 4.75 MPa and an elongation of about 700

percent.

Examples 42-54

Examples 42-54 illustrate the use of several different additives in compositions of the invention.

The indicated solid additives were first incorporated into fluorosilicone gum using a rubber mill and then the compositions were prepared and cured to form an elastomer as in Examples 1-4.

The formulations of each composition and properties of the resultant elastomers are tabulated in Table V.

Table V

| Exam. | Gum | Additive | Additive Amount (grams) | Catalyst Amount (grams) | Crosslinker Amount (grams) | Tensile Strength (MPa) | Elongation (%) |
|---|---|---|---|---|---|---|---|
| 42 | LS-2380U | Carbon Black[1] | 5.0 | 0.7 | 3.7 | 4.1 | 550 |
| 43 | LS-2380U | Iron Oxide | 5.0 | 0.7 | 3.7 | 4.6 | 450 |
| 44 | LS-2380U | Silica[2] | 5.0 | 0.7 | 3.7 | 3.5 | 290 |
| 45 | LS-2840 | Black Dye[3] | 0.4 | 0.9 | 3.9 | 3.2 | 820 |
| 46 | LS-2860 | Silica[2] | 2.0 | 0.9 | 3.9 | 5.0 | 640 |
| 47 | LS-2860 | Silica[4] | 2.0 | 0.9 | 3.9 | 5.0 | 620 |
| 48 | LS-2860 | Calc. Oxide[5] | 2.0 | 0.9 | 3.9 | 3.4 | 170 |
| 49 | LS-2860 | Calc. Oxide[5] | 3.3 | 0.9 | 3.9 | 3.4 | 200 |
| 50 | LS-2860 | Calc. Oxide[5] | 4.0 | 0.9 | 3.9 | 1.6 | 110 |
| 51 | LS-2860 | Isocyanurate[6] | 0.3 | 0.7 | 3.9 | 4.2 | 700 |
| 52 | LS-2860 | Isocyanurate[6] | 0.3 | 1.0 | 3.9 | 4.7 | 770 |
| 53 | LS-2860 | Isocyanurate[6] | 0.7 | 1.0 | 3.9 | 4.1 | 760 |
| 54 | LS-2860 | Isocyanurate[6] | 1.0 | 1.0 | 3.9 | 3.7 | 710 |

[1] STERLING R Carbon Black having specific gravity of 1.79, available from Cabot Corporation.
[2] AEROSIL R-972 Silica having specific gravity of 2.2, available from Degussa Co.
[3] OIL BLACK #935 DYE, available from Eaton Chemical & Dyestuff Co.
[4] CAB-O-SIL EH-5 Silica having specific gravity of 2.2, available from Cabot Corporation.
[5] Calcium oxide.
[6] DIAK #7 Triallyl Isocyanurate, available from E.I. du Pont de Nemours.

Examples 55-67

Examples 55-67 illustrate the superior solvent resistance and heat resistance of elastomers of the invention.

The compositions in these Examples were made as in Examples 42-54 with the following formulations.

| Formula | Gum | Catalyst Amount (grams) | Crosslinker Amount (grams) | Additive | Additive Amount (grams) |
|---|---|---|---|---|---|
| A | LS-2380U | 0.7 | 3.7 | --- | --- |
| B | LS-2380U | 0.7 | 3.7 | Carbon Black | 5.0 |
| C | LS-2380U | 0.7 | 3.7 | Iron Oxide | 5.0 |
| D | LS-2860 | 0.9 | 3.9 | --- | --- |
| E | LS-2840 | 0.9 | 3.9 | --- | --- |

The properties of the resultant elastomers in these Examples are tabulated in Table VI.

Table VI

| Example | Formula | Temperature (°C) | Time (Hrs) | Immersion[1] (Y/N) | Tensile Strength (MPa) | Elongation (%) |
|---|---|---|---|---|---|---|
| 55 | A | 71 | 1 | N | 5.6 | 380 |
| 56 | A | 71 | 2 | N | 5.7 | 320 |
| 57 | A | 177 | 1 | N | 6.2 | 160 |
| 58 | A | 177 | 2 | N | 6.1 | 180 |
| 59 | B | 177 | 2 | N | 5.9 | 150 |
| 60 | C | 177 | 2 | N | 4.0 | 110 |
| 61 | D | 177 | 8 | N | 5.0 | 390 |
| 62 | D | 191 | 8 | N | 5.5 | 390 |
| 63 | E | 232 | 28 | N | 2.3 | 60 |
| 64 | D | 60 | 168 | Y | | |
| | | 177 | 8 | N | 4.9 | 410 |
| 65 | D | 60 | 168 | Y | | |
| | | 191 | 8 | N | 4.7 | 360 |
| 66 | E | 60 | 168 | Y | | |
| | | 177 | 8 | N | 4.6 | 540 |
| 67 | E | 60 | 168 | Y | | |
| | | 191 | 8 | N | 4.1 | 500 |

[1] Immersion in JP-4 Jet Fuel.

Examples 68-75

Examples 68-75 illustrate the low swelling characteristics of elastomers of the invention.

Elastomeric films were prepared as in Examples 55-67 using formulations D and E. Specimens were cut from each film and immersed in JP-4 Jet Fuel at the indicated temperature for 7 days, i.e., about 168 hours (Stage I), and then, as indicated in Table VII, either tested immediately or subjected to elevated temperature for 8 hours (Stage II) and then tested.

The test sequences and results are tabulated in Table VII.

Table VII

| Examples | Formula | Stage I Temperature (°C) | Stage II Temperature (°C) | Volume Swell (%) |
|---|---|---|---|---|
| 68 | D | 23 | --- | 4.9 |
| 69 | D | 60 | --- | 4.4 |
| 70 | D | 23 | 177 | 0.0 |
| 71 | D | 60 | 191 | 0.0 |
| 72 | E | 23 | --- | 3.2 |
| 73 | E | 60 | --- | 4.8 |
| 74 | E | 23 | 177 | 0.0 |
| 75 | E | 60 | 191 | 0.0 |

Examples 76 and 77

In Examples 76 and 77, compositions of the same formulations as in Examples 3 and 14, respectively, were prepared and the properties of the resultant elastomers determined at low and high temperatures as

well as at room temperature by an outside laboratory with capability for making the low and high temperature tests.

The results obtained are tabulated in Table VIII.

TABLE VIII

| Temp (°C) | Test | Example 76 | Example 77 |
|---|---|---|---|
| -55 | Tensile (MPa) | [1]>12.2 | 13.2 |
| -55 | Elongation (%) | [1]>330 | 200 |
| -55 | Hardness[2] | 26 | 56 |
| 22 | Tensile (MPa) | 6.0 | 4.3 |
| 22 | Elongation (%) | 660 | 320 |
| 22 | Hardness[2] | 30 | 57 |
| 218 | Tensile (MPa) | 1.6 | 1.4 |
| 218 | Elongation (%) | 190 | 50 |
| 218 | Hardness[2] | 31 | 60 |

[1] Did not break
[2] Shore A

Examples 78 and 79

Examples 78 and 79 illustrate ultraviolet radiation-curable compositions of the invention and the properties of the resultant elastomers formed therefrom.

In Example 78, a composition was prepared by mixing 30.0 grams of SILASTIC Brand LS-2840, 1.17 grams of a crosslinking agent (having the formula $Me_3SiO(SiMe_2O)_{29}(SiHMeO)_9SiMe_3$), about 10 milligrams of the catalyst ( $^5$-cyclopentadienyl)-trimethylplatinum, and 120 grams of 2-butanone in a one quart can. The composition was protected from light and concentrated to constant weight by passing a slow stream of nitrogen over the mixture.

In Example 79, a composition was prepared in the same manner except that SILASTIC Brand LS-2860 was used as the fluorosilicon gum in place of LS-2840.

The resultant compositions, which were putty-like in consistency, were each spread into a mold as in Examples 1-9, and then irradiated with a 450 Watt medium pressure mercury lamp for 5 minutes and then heated to 100°C for 15 minutes.

The properties of the resultant elastomers were then determined as in Examples 1-9. The elastomer of Example 78 was found to have a tensile strength of about 6.2 megapascals and an elongation of about 750 percent at room temperature. The elastomer of Example 79 was found to have a tensile strength of about 2.48 megapascals and an elongation of about 350 percent at room temperature.

The composition in Example 78 was sufficiently clear to permit an effective cure upon irradiation with the ultraviolet lamp, whereas the composition in Example 79 was cloudier, more opaque in appearance and did not cure completely.

Various modifications and alterations of this invention will become apparent to those skilled in the art without departing from the scope and spirit of this invention.

## Claims

1. A curable organofluorosilicone composition characterized in that said composition comprises:

(a) at least one addition-curable, fluorine-containing polydiorganosiloxane having pendant ethylenically-unsaturated groups, represented by the formula:

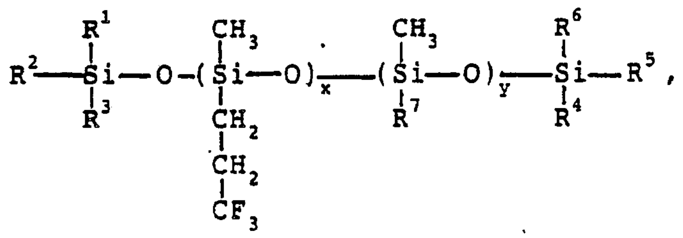

wherein $R^1$, $R^2$, $R^3$, $R^4$, $R^5$, and $R^6$ are each a substantially nonfunctional organic group; $R^7$ contains at least two carbon atoms and at least one ethylenically-unsaturated bond; the ratio of y to x is such that the mole percent of olefinic moiety content is between about 0.1 and about 4.0; the weight average molecular weight is between about 200,000 and about 700,000, as determined by gel permeation chromatography; and the fluorine content is at least about 20 weight percent;

(b) a sufficient amount to cure said composition of at least one siloxane crosslinking agent represented by the formula:

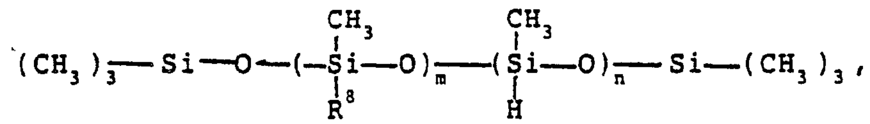

wherein $R^8$ is an alkyl, substituted alkyl, or cyano; (m + n) is between about 20 and 70; the ratio of m:n is between about 1:1 and about 6:1; and the Si-H equivalent weight is between about 65 and about 520; and

(c) an effective amount of a hydrosilation catalyst to cure said composition.

2. The composition of claim 1 further characterized in at least one of the following:

(I) said ratio of y to x is such that the mole percent of olefinic moiety content is between about 1.0 and about 2.0; the weight average molecular weight is between about 250,000 and about 650,000, as determined by gel permeation chromatography; and the fluorine content is at least about 30 weight percent;

(II) said ratio of m:n is between about 2.5:1 and about 4:1, and said Si-H equivalent weight is between about 200 and about 350; or

(III) said composition contains between about 0.5 and 10 parts by weight of said crosslinking agent per 100 parts by weight of said polydiorganosiloxane.

3. The composition of any one of claims I or 2 further characterized in that said composition further comprises a solvent.

4. The composition of claim 3 further characterized in at least one of the following:

(I) said solvent comprises at least one of the following: methylethyl ketone, methylisobutyl ketone, acetone, cyclohexanone, 1,1,1-trichloroethane, ethyl acetate, toluene, tetrahydrofuran, cyclohexane, chloroform, or methylene chloride; or

(II) up to about 85 weight percent of said composition is said solvent.

5. The composition of any one of claims 1-4 further characterized in that said hydrosilation catalyst is based upon a platinum-group metal.

6. The composition of any one of claims 1-5 further characterized in that said hydrosilation catalyst contains platinum.

7. The composition of any one of claims 1-6 further characterized in that said catalyst is either self-initiating or activated by exposure to actinic radiation.

8. The composition of any one of claims 1-7 further characterized in that said composition further comprises at least one of the following additives: filler, colorant, surfactant, reactive diluent, antioxidant, ultraviolet absorber, inhibitor, or adhesion promoter.

9. The composition of claim 8 further characterized in that said adhesion promoter comprises an unsaturated alkoxy silane.

10. The composition of any one of claims 1-9 further characterized in that said $R^8$ group is a methyl group.

11. The composition of any one of claims 1-10 further characterized in that the ingredients of said composition are packaged in two parts which are combinable to form said composition, the first of said parts comprising:
(I) about 100 parts by weight of at least one addition-curable, fluorine-containing polydiorganosiloxane having pendant ethylenically-unsaturated groups; and
(II) an effective amount of said hydrosilation catalyst;
and the second of said parts comprising:
(I) about 100 parts by weight of at least one addition-curable, fluorine-containing polydiorganosiloxane having pendant ethylenically-unsaturated groups; and
(II) between about 1 and about 20 parts by weight of said crosslinking agent.

12. The composition of claim 11 further characterized in at least one of the following:
(I) at least one of said first and second parts comprises at least one of the following: solvent, filler, colorant, surfactant, reactive diluent, antioxidant, ultraviolet absorber, inhibitor, or adhesion promoter; or
(II) said first and second parts comprise solvent and have substantially the same percent solids level.

13. The composition of any one of claims 1-12 further characterized in that said catalyst is ultraviolet radiation-activated and said composition is ultraviolet radiation curable.

14. The product resultant from curing the composition of any one of claims 1-13 by hydrosilation.

15. A process for forming a fluid storage vessel characterized in that said process comprises applying a coating of the composition of claim 1 to structural surfaces defining the shape of said vessel and curing said composition in situ to elastomeric form.

16. The process of claim 15 further characterized in that at least one of the following:
(I) said composition is applied in successive coats;
(II) said composition is applied sufficiently thickly that the cured thickness thereof is between about 10 mils and 70 mils; or
(III) primer is applied to said structural surfaces prior to application of said composition thereto.

17. A fuel tank characterized in at least one of the following:
(I) said tank is formed from the composition of any one of claims 1-13; or
(II) said tank is formed by the process of any one of claims 15 or 16.